# EUROPEAN PATENT APPLICATION

(11) **EP 2 793 014 A1**
(43) Date of publication of application: **22.10.2014**
(21) Application number: 12856801.1
(22) Date of filing: 12.12.2012
(51) Int. Cl.: G01N 1/02, G01N 33/22

(54) **OBJECT SURFACE HAZARDOUS SUBSTANCE DETECTION APPARATUS AND DETECTION METHOD**

(30) Priority: 16.12.2011 CN 201110423036
(71) Applicant: Nuctech Company Limited, Tongfang Building Shuangqinglu Haidian District Beijing 100084 (CN)
(72) Inventor: LIN, Weizhi, Beijing 100084 (CN); YU, Haijun, Beijing 100084 (CN); ZHANG, Yangtian, Beijing 100084 (CN)
(74) Representative: Loock, Jan Pieter
(86) International application number: PCT/CN2012/001689
(87) International publication number: WO 2013/086783

(57) **Abstract**

An apparatus and a method for detecting hazardous substances on a surface of an object are provided. The apparatus for detecting hazardous substances on a surface of an object comprises: a conveyer belt (1) for conveying an object, a capture device (6) provided to match the conveyer belt (1), wherein the capture device (6) may automatically capture a substance adsorbed on the surface of the object when the object is being conveyed by the conveyer belt (1), and a detection module (3) for automatically detecting the substance captured by the capture device (6). The present invention also provides a method for detecting a substance adsorbed on the surface of an object by utilizing the detection apparatus and a method for detecting whether the detected substance is hazardous or not. The detection technique of the present invention enables quick detection for poisons, explosives, and other substance particles attached on the surfaces of cargos and mails.

## Description

### Technical Field

The present invention relates to the technical field of detection, and more particularly, to detection apparatus and detection method of an object surface adsorbed substance. The substance on the surface of the object may be poisons, explosives or other hazardous substances. The detection technique of the present invention allows quick detection of poisons, explosives, and other substance particles on surfaces of cargos and mails. Such technique of the present invention belongs to the technical field of the ion migration detection application.

### Background Art

With the development of globalization, especially the rise of on-line shopping in recent years, the number of mails rises sharply around the world. However, since the 911 incident, Counter-terrorism becomes more and more important. "Mail bombs" become a common measure for the terrorists to launch a terrorism attack. Meanwhile, many criminals transport prohibited goods such as poisons, etc. via mails.

However, it will take a lot of human labors and material resources to detect that many mails by using traditional detection methods. For example, detecting explosive with a conventional radiation imaging technique requires operators to make judgment based on their experiences. But prohibited goods such as poisons, explosives, etc. can be made in various shapes, which brings extreme difficulties in judging via images. Moreover, when detecting poisons, explosives, etc. by means of traditional ion migration techniques, inspection staff actively wipes the surfaces of goods with special test papers, and then puts the test paper into a detecting device for detection. Such detection method has a relatively low efficiency and a relatively low detection speed.

### Summary of the Invention

The main objects of the present invention are to increase the speed of detecting goods and mails for ion migration equipment, and to decrease human labors involved in the detection process. The present invention utilizes a conveyor belt to automatically complete the collection of substance particles on the surfaces of goods and mails in a way of actively contacting the friction unit with the surfaces of goods and mails, so as to automatically introduce samples and conduct detection, which decreases workload of staffs in the detection process in view of the detection with the traditional ion migration equipment, which increases the working efficiency and achieves the object of quick detection.

In order to achieve above objectives of the invention, the present invention provides the following technical solutions:
A detection apparatus for detecting a hazardous substance on an object surface, which comprises:
   a conveyer belt for use in conveying an object; an capture device provided to match the conveyer belt, where the capture device is able to automatically capture a substance adsorbed on the surface of the object while the conveyer belt is conveying the object; a detection module for use in automatic detection of the substance captured by the capture device and determination of whether the substance is a hazardous or not, wherein such hazardous substances can be poisons or explosives, etc..

Preferably, the capture device can comprise a surface friction unit which is able to contact with the object surface and to rub and adsorb the substance on the object surface.

The detection apparatus of the present invention can further comprise a retractable device of the surface friction unit which is able to automatically retract and extract the surface friction unit.

The detection apparatus of the present invention can further comprise a heating device which is able to heat the capture device so as to volatilize the substance captured by the capture device. Preferably, the detection module is coupled to the heating device and captures the volatilized gas from the heating device for detection.

The detection apparatus of the present invention can further comprise a support of the surface friction unit, the support is arranged to slightly protrude out of the conveyer belt. Preferably, the support can comprise a section of plane in the middle part, and the plane supports the surface friction unit. In addition, the support can be coupled to an elastic device under the plane, and the elastic device is arranged so that the support is pressed down without impeding the pass of the object when the object passes the support. Meanwhile the surface friction unit closely contacts with the object surface. Preferably, for example, the elastic device is a spring.

Preferably, the surface friction unit is a sieve, for example, a stainless steel metallic sieve, and the retractable device can be a sieve reel, the heating device can be a sieve heating barrel, wherein the sieve reel is arranged inside the sieve heating barrel. Preferably, the sieve can be automatically retracted into the sieve heating barrel, or extracted from the sieve heating barrel. More preferably, the sieve is wound around the sieve reel when it is automatically retracted. In addition, a heating block can be embedded in the sieve heating barrel in advance to form a heating body, in order to heat the sieve retracted into the sieve heating barrel, so that the substance attached on the sieve is volatilized.

The detection apparatus of the present invention can further comprise a camera device such as a camera, which is arranged to take pictures of the object when detecting the object.

In addition, the detection apparatus of the present invention can further comprise an optoelectronic switch, a synchronizing wheel, a driving motor, a synchronizing belt, a Hall switch, a heating control module and a movement control module, etc. which are provided to match therewith.

According to another aspect of the present invention, there provided a method for capturing the substance adsorbed on the surface of the object, which comprises: conveying the object using the conveyer belt; when conveying the object using the conveyer belt, automatically capturing the substance adsorbed on the object surface by utilizing the capture device.

In addition, the present invention also utilizes the above method for capturing the substance adsorbed on the surface of the object to further detect the substance adsorbed on the surface of the object, which comprises utilizing at least one above mentioned detection module to automatically detect the substance. Preferably, two detection modules can be provided, the two detection modules operate alternately. Alternatively, only one detection module can be provided, the one detection module operates continuously and progressively.

### Brief Description of the Drawings

Hereinafter from the detailed description in combination with the attached figures, these and other objectives and advantages of the present invention will be more obvious. In the figures:
Fig. 1 is an outside schematic view of the device of the present invention when it is installed with two ion migration detection modules;
Fig. 2 is an inside schematic view of the device of the present invention when it is installed with two ion migration detection modules;
Fig. 3 is a bottom schematic view of the device of the present invention when it is installed with two ion migration detection modules;
Fig. 4 is a sectional view of the heating device of the surface friction unit;

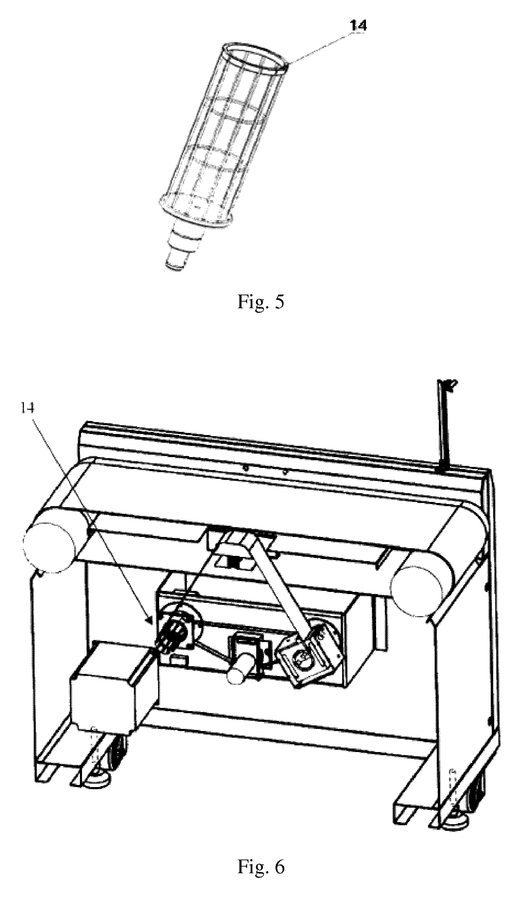

Fig. 5 is a schematic view of the retractable device of the surface friction unit;
Fig. 6 is an inside schematic view when only one ion migration detection module is installed;
Fig. 7 is a bottom schematic view when only one ion migration detection module is installed;
Fig. 8 is a schematic view of the support of the surface friction unit.

### List of the reference signs

1- conveyer belt, 2- sieve support, 3- iron migration detection module, 4-sieve heating barrel, 5- optoelectronic switch, 6- sieve, 7- synchronizing wheel, 8- driving motor, 9- synchronizing belt, 10- air extracting opening, 11- heating barrel cover, 12- internal heating block, 13- external heating body, 14-sieve reel, 15- synchronizing wheel coupling shaft, 16- outside heating block, 17- camera and its support, 18- Hall switch, 19- heating control module, 20- movement control module

### Detailed Description of Embodiments

Hereinafter, the examples of the present invention are specifically described in combination with the attached figures.

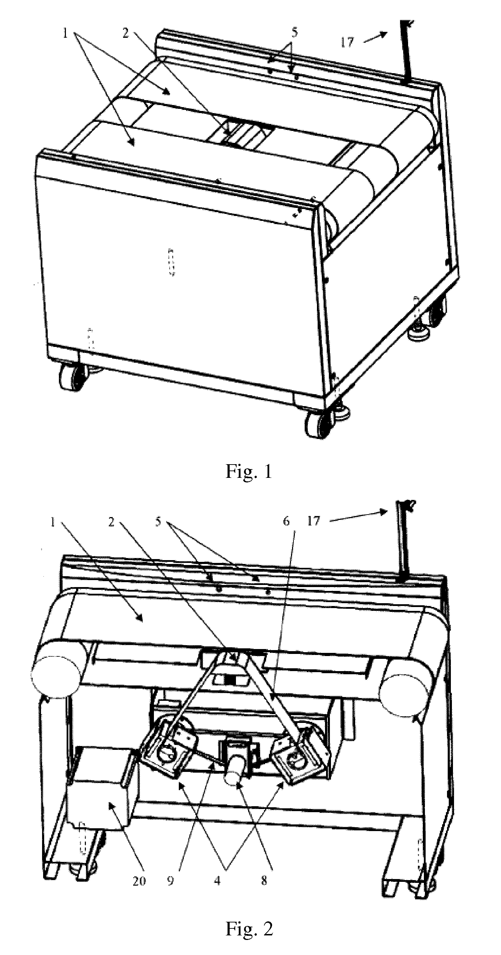

Fig. 1- Fig. 3 illustratively show schematic views of the outside, the inside and the bottom of the device of the present invention with two installed ion migration detection modules. The device of the present invention comprises at least one object detection system.

As is shown in the figures, conveyer belt 1 is arranged at the top of the detection system. A capture device is provided at an appropriate position near the middle of conveyer belt 1. Such capture device is able to automatically acquire a substance adsorbed on the surface of the object when conveyer belt 1 is conveying the object. Particularly, the capture device can comprise a surface friction unit which is able to contact with the object surface and to rub and adsorb the substance on the object surface. However, the present invention is not limited to a device that acquires a substance adsorbed on the surface of the object by friction. The way of capturing a substance adsorbed on the surface of the object by means of any appropriate measure is feasible (for example, a blowing and extracting device can be provided in the sieve support, when an object is passing, a substance adsorbed on the surface of the object is captured in a way of blowing and extracting airflows). In an embodiment of the present invention, such surface friction unit is sieve 6, such as a stainless steel metallic sieve.

The detection apparatus of the present invention can further comprise a retractable device of the surface friction unit which is able to automatically retract and extract the surface friction unit. In an embodiment of the present invention, the retractable device is sieve reel 14 which can utilize synchronizing belt 9 to retract and extract sieve 6.

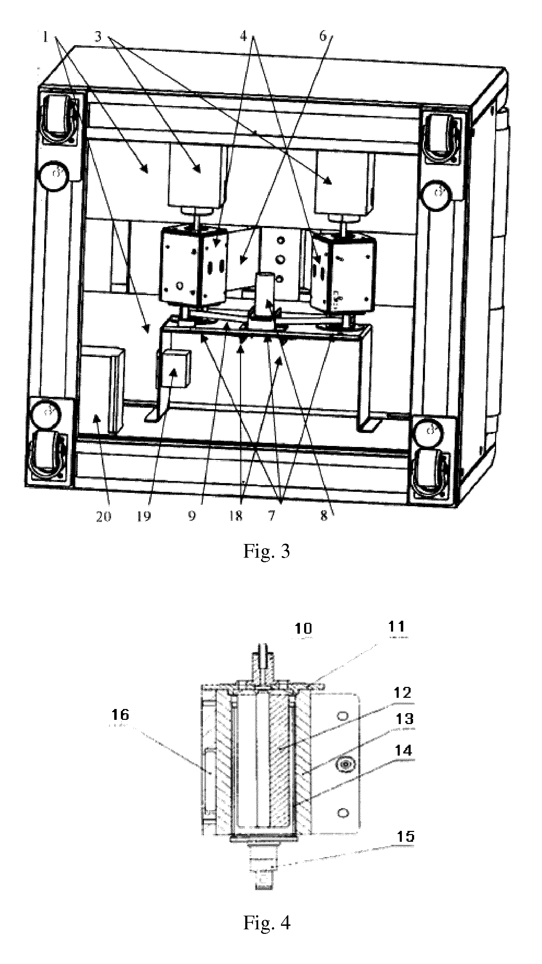

The detection apparatus of the present invention can further comprise a heating device which is able to heat the capture device so as to volatilize the substance captured by the capture device. In an embodiment of the present invention, such heating device is sieve heating barrel 4 which heats sieve 6 so as to volatilize the substance captured by sieve 6. As is shown in Fig. 4, sieve heating barrel 4 comprises sieve reel 14, heating block 12 is provided inside sieve reel 14, external heating body 13 is provided around the sieve reel outside, and sieve reel 14 is controlled by heating control module 19 (shown in Fig. 2) to stabilize the temperature around a preset value.

In a preferred embodiment of the present invention, for example, detection module 3 used for detecting a hazardous substance such as poisons, explosives, etc. is coupled to sieve heating barrel 4 to acquire volatilized gas from sieve heating barrel 4 for detection.

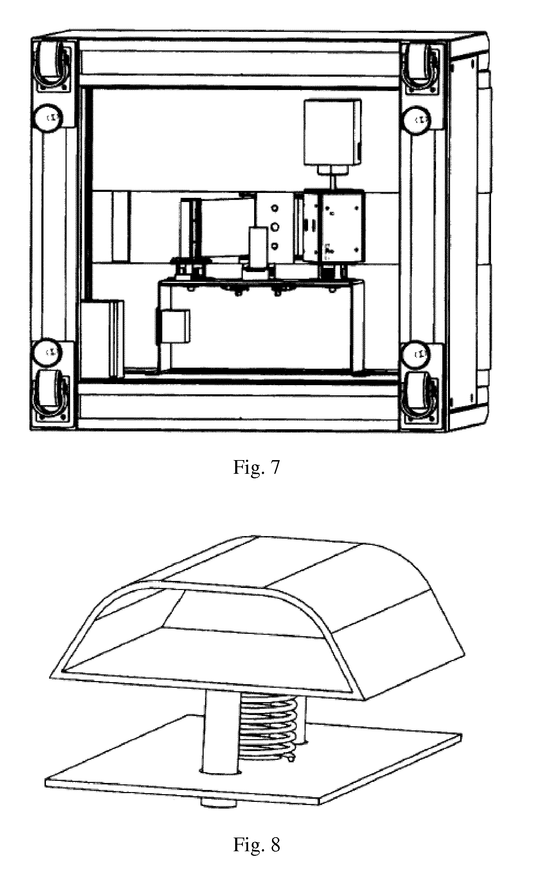

The detection apparatus of the present invention can further comprise a support of the surface friction unit, as shown in Fig. 8, such support is illustratively shown as sieve support 2. As is shown in Fig. 1 or Fig. 2, such support 2 is arranged to slightly protrude out of the conveyer belt 1. Preferably, the support 2 can comprise a section of plane in the middle part. The plane is used for supporting sieve 6 to ensure a close contact between the sieve and the object surface. In addition, the support 2 can be coupled to an elastic device under the top of the support, the elastic device is arranged so that the support 2 is pressed down without impeding the pass of the object when the object passes the support 2, meanwhile sieve 6 closely contacts with the object surface. Preferably, for example, the elastic device is a spring. In addition, a smooth transition part can be provided on both sides of the top plane of support 2, such as an arc shaped transition part thereof. The smooth transition part is coupled to a corresponding slope, so that sieve 6 is able to move smoothly on the surface of support 2 without impeding the pass of the object (for example, goods and mails). Preferably, an appropriate number of struts can be provided on both sides of the elastic device, the lower part of the elastic device is coupled to a baseboard, the struts pass through the corresponding through-holes in the baseboard, so that the elastic device moves up and down stably when support 2 operates. However, the present invention is not limited to such offset device as a spring, and any device which can realize functions of the above support 2 is feasible. For example, the spring can be replaced by an elastic rod which can be coupled vertically between the top surface and the baseboard, so that when an object passes support 2, the elastic rod is bent so as to press down the support 2 without impeding the pass of the object, meanwhile sieve 6 contacts closely with the object surface.

The detection apparatus of the present invention can further comprise a camera device 17, such as a camera which is arranged to be activated for taking a picture of the object when the detected object shelters optoelectronic switch 5.

Hereinafter the method for operation of the present invention is described illustratively by means of specific embodiments.

When two sets of heating barrels and hazardous substance detection modules 3 (for example, poisons or explosives, etc.) are provided, it is possible to realize non-stop detection, at this time the operating flow of the device of the present invention is as follows:
When the detection begins and hazardous substance detection modules 3 on both sides are all in a ready state, driving motor 8 rotates anticlockwise, allowing synchronizing wheel 7 to rotate via synchronizing belt 9, and extracting sieve 6 coupled to synchronizing wheel coupling shaft 15 from sieve heating barrel 4 on the right. A pair of Hall switches 18 is provided under driving motor 8, and movement control module 20 controls revolutions of driving motor 8 by using Hall switches.

Conveyer belt 1 begins to rotate, and both sides of the front end and the back end of sieve support 2 are respectively provided with a pair of optoelectronic switches 5. When goods and mails pass sieve support 2 and shelter the two pairs of optoelectronic switches 5, camera 17 is activated to take pictures of goods and mails.

When the goods are passing and hazardous substance detection module 3 on both sides are all in a ready state, driving motor 8 rotates clockwise and retract sieve 6 into sieve heating barrel 4 on the right. Sieve heating barrel 4 heats sieve 6 so as to volatilize a substance adsorbed on the surface of sieve 6. Hazardous substance detection module 3 on the right side starts to enter into the detection state. The volatilized gas is extracted from sieve heating barrel 4 on the right side through air extracting opening 10 on sieve heating barrel 4 on the right side for detection. If the detection result is normal, it enters into the ready state again. If the prohibited goods such as poisons, explosives, etc. are detected, then the alarming information and pictures taken by activation are packed and sent to the detection personnel via networks, and then the inspection personnel conducts detailed examinations on these suspicious goods and mails, meanwhile hazardous substance detection module 3 on the right side enters into a clean state, cleaning sieve heating barrel 4 on the right side and the gas adsorbed into inside of itself. After the cleaning is over, it automatically enters into the ready state.

When the goods are passing again and hazardous substance detection module 3 on both sides are in the ready state, driving motor 8 rotates anticlockwise and retracts sieve 6 into sieve heating barrel 4 on the left, hazardous substance detection module 3 on the left side starts to enter into the detection state. In this way, it performs on the right side and on the left side alternately.

In order to save cost, the equipment of the present invention can be only provided with one set of the sieve heating barrel and the hazardous substance detection module, the other part thereof is only provided with one sieve reel, however in this case, a circumstance that conveyer belt 1 temporarily stops moving may occur. Meanwhile, the length of the sieve on this device is longer than that provided with two sets of the sieve heating barrels and the hazardous substance detection modules, when the sieve is completely retracted into the sieve heating barrel on the right, the sieve will be close to filling the entire sieve heating barrel. The detection process is as follows:
When the detection begins and when hazardous substance detection modules 3 on the right side is in a ready state, driving motor 8 rotates anticlockwise and completely extracts the excessive part of sieve 6 from sieve heating barrel 4 on the right side.

Conveyer belt 1 begins to rotate, when the goods and mails pass sieve support 2 and shelter the two pairs of optoelectronic switches 5, camera 17 is activated to take pictures of goods and mails.

When the goods and mails are passing, hazardous substance detection module 3 on the right side is in a ready state, and excessive sieve 6 on sieve reel 14 is not retracted into sieve heating barrel 4 on the right side, driving motor 8 rotates clockwise and retracts the part of the sieve beginning from the left end of sieve support 2 to sieve heating barrel 4 on the right side into sieve heating barrel 4 on the right. Hazardous substance detection module 3 on the right side starts to enter into detection state.

In this way the detection is continuous and progressive until there are not excessive sieves on sieve reel 14. At this moment, conveyer belt 1 stops moving, here it is necessary to stop and wait for a period of time until hazardous substance detection module 3 on the right side completes the detection and is back to the ready state again, sieve 6 is completely extracted from sieve heating barrel 4 on the right side again, and the detection is conducted again according to the above steps.

Although a method for detection of the substance adsorbed on the object surface by arranging one or two sets of detection modules is described in detail in the preceding text, the present invention is not limited thereto. Any appropriate numbers of detection modules can be provided according to practical requirements. The present invention saves a large quantity of manpower and materials required by the traditional detection technique by means of the above detection device and detection method. In particular, the present invention enhances the speed of ion migration equipment for detection of goods and mails, and decreases personnel input in the detection process. The present invention utilizes a conveyor belt to automatically complete collection of substance particles on the surface of goods and mails in a way of actively contacting the friction unit, to automatically introduce samples and to conduct detection, which decreases workload of workers in the detection process by using traditional ion migration equipment, which enhances working efficiency and achieves the objective of quick detection.

It should be noted that, the exemplary embodiments described in the present application are descriptions for preferred embodiments of the present invention, but not a limit to the scope of the present invention in any ways. A person skilled in the art can make various combinations and transformations to various embodiments of the present invention from a teaching in the preceding text according to practical requirements. Without departing from the scope and spirit of the present invention, various modifications and amendments can be made to the detection device and the detection method of the present invention according to practical detection requirements.

## Claims

1. A detection apparatus for detecting whether hazardous substance exists on a surface of an object, which comprises:
a conveyer belt for conveying the object;
a capture device provided to match the conveyer belt, wherein the capture device captures automatically a substance adsorbed on the surface of the object while the object is being conveyed by the conveyer belt; and
a detection module for detecting automatically the substance captured by the capture device and identifying whether the substance is the hazardous substance or not.

2. The detection apparatus of claim 1, wherein the capture device comprises a surface friction unit which contacts with the surface of the object and adsorbs the substance thereon by rubbing.

3. The detection apparatus of claim 2, further comprises a retractable device for the surface friction unit, and the retractable device automatically retracts and extracts the surface friction unit.

4. The detection apparatus of claim 2, further comprises a heating device which heats the capture device to volatilize the adsorbed substance captured by the capture device.

5. The detection apparatus of claim 4, wherein the detection module is coupled to the heating device, from which the volatilized gas is captured for detection.

6. The detection apparatus of claim 2, further comprises a support for the surface friction unit, and the support is arranged to slightly protrude out of the conveyer belt.

7. The detection apparatus of claim 6, wherein the support comprises a section of plane in a middle part thereof, and the plane is used to support the surface friction unit.

8. The detection apparatus of claim 7, wherein the support is connetcted to an elastic device under the plane, the elastic device is arranged so that as the object passes the support, the support is pressed down without impeding passing of the object and the surface friction unit contacts closely with the object surface.

9. The detection apparatus of claim 8, wherein the elastic device is a spring.

10. The detection apparatus of any one of claims 2-9, wherein the surface friction unit is a sieve, the retractable device is a sieve reel, the heating device is a sieve heating barrel, and the sieve reel is arranged inside the sieve heating barrel.

11. The detection apparatus of any one of claims 1-9, further comprises a camera device which is arranged to take pictures of the object while the object is being detected.

12. A method for capturing a substance adsorbed on a surface of an object, which comprises:
conveying the object with a conveyer belt; and
capturing automatically the substance adsorbed on the surface of the object with a capture device when the conveyer belt is conveying the object.

13. The method of claim 12, wherein the capture device comprises a surface friction unit which contacts with the surface of the object and adsorbs the substance thereon by rubbing.

14. The method of claim 13, further comprises automatically retracting and extracting the surface friction unit with a retractable device.

15. The method of claim 13, further comprises providing a support for the surface friction unit, and the support is arranged to slightly protrude out of the conveyer belt.

16. The method of claim 15, wherein the support includes an elastic device, the elastic device is arranged so that as the object passes the support, the support is pressed down without impeding passing of the object and the surface friction unit contacts closely with the object surface when the object passes the support.

17. The method of any one of claims 13-16, wherein the surface friction unit is a sieve and the retractable device is a sieve reel.

18. A method for detecting hazardous substance particles on a surface of an object by utilizing the method of any one of claims 12-17, which comprises:
detecting automatically the hazardous substance with one or more detection modules.

19. The method of claim 18, further comprises: heating the capture device with a heating device to volatilize the adsorbed substance after capturing the substance on the surface of the object.

20. The method of claim 19, further comprises coupling a detection module to the heating device and capturing the volatilized gas from the heating device for detection.

21. The method of any one of claims 18-20, further comprises providing a camera device arranged to take pictures of the object while the object is being detected.

22. The method of any one of claims 18-20, wherein two detection modules are provided which operate alternately.

23. The method of any one of claims 18-20, wherein only one detection module is provided, which operates continuously and progressively.
